# FASCICULE DE BREVET EUROPEEN

(11) **EP 3 042 334 B1**
(45) Date de publication et mention de la délivrance du brevet: **15.04.2020**
(21) Numéro de dépôt: 14777706.4
(22) Date de dépôt: 04.09.2014
(51) Int. Cl.: G06F 21/55, G06F 21/34, G07F 7/10, G06F 21/78

(54) **PROCÉDÉ DE MISE EN PLACE DE MOYENS DE SÉCURITÉ EN FONCTION D'UN INDICE DE CONFIANCE VARIANT AVANT ET APRÈS L'EXÉCUTION DE COMMANDES SOUS LA FORME DDANS UN DISPOSITIF ÉLECTRONIQUE À MÉMOIRE, ET DISPOSITIF POUR LA MISE EN OEUVRE DUDIT PROCÉDÉ**
VERFAHREN ZUR INSTALLATION EINER SICHERHEITSVORRICHTUNG IN ABHÄNGIGKEIT EINEN VERTRAUENSINDEX IN EINER ELEKTRONISCHEN VORRICHTUNG MIT SPEICHER UND VORRICHTUNG ZUR DURCHFÜHRUNG DES VERFAHRENS
METHOD OF SETTING UP SAFETY MEANS DEPENDING ON A TRUST INDICIA VARYING BEFORE AND AFTER COMMAND EXECUTION IN AN ELECTRONIC DEVICE WITH MEMORY, AND DEVICE FOR IMPLEMENTING SAID METHOD

(30) Priorité: 05.09.2013 FR 1358519
(43) Date de publication de la demande: 13.07.2016
(73) Titulaire: Idemia Identity & Security France, 92400 Courbevoie (FR)
(72) Inventeur: SERE, Ahmadou, F-92445 Issy les Moulineaux (FR); BERTHIER, Maël, F-92445 Issy les Moulineaux (FR); GESLAIN, Raphaël, F-92445 Issy les Moulineaux (FR)
(74) Mandataire: Cabinet Le Guen Maillet
(86) Numéro de dépôt international: PCT/FR2014/052186
(87) Numéro de publication internationale: WO 2015/033069

(56) Documents cités:
- EP-A1- 1 413 980
- DE-A1-102010 044 687
- US-A1- 2012 255 005
- B. ROBISSON ET AL: "Management of the security in smart secure devices", SMART SYSTEMS INTEGRATION, DRESDEN, 22 - 23 MARCH 2011, 22 mars 2011 (2011-03-22), XP055064434, Germany ISBN: 978-3-80-073324-8
- Wolfgang Rankl: "Überblick zu Angriffe auf Chipkarten", , 11 avril 2003 (2003-04-11), XP055122281, Extrait de l'Internet: URL:http://www.wrankl.de/HdC/Angriffe.pdf [extrait le 2014-06-10]

## Description

La présente invention concerne un procédé de mise en place de moyens de sécurité dans un dispositif électronique à mémoire, tel qu'une carte à puce, ainsi qu'un dispositif électronique à mémoire, tel qu'une carte à puce, pourvu de moyens pour la mise en œuvre dudit procédé. L'invention est définie par les revendications indépendantes. Les revendications dépendantes donnent des exemples de l'invention.

Le document DE 10 2010 044687 A1 (GIESECKE & DEVRIENT GMBH [DE]) 8 mars 2012 (2012-03-08) divulgue l'utilisation de plusieurs compteurs de protection de processus de contrôle à deux issues. Ces compteurs sont décrémentés à la réception des APDUs correspondantes sur la carte à puces et de nouveau ré-incrémentés après le traitement de ces APDUs. Un compteur est associé à chaque type de commandes (APDUS) reçues . L'incrément ou le décrément peut être utilisé de façon interchangeable, avec le même effet technique. Les valeurs auxquelles sont remis les compteurs en cas de succès du traitement des commandes peut être fixé lors de la fabrication ou bien lors d'une étape ultérieure . En particulier, cette valeur peut dépendre de l'historique de la carte. Le document EP 1 413 980 A1 (SCHLUMBERGER SYSTEMS & SERVICE [FR]) 28 avril 2004 (2004-04-28) divulgue aussi l'utilisation de compteurs de protection de processus de contrôle a deux issues. Deux compteurs sont associés et l'un d'eux indique le temps d'attente imposé par le processeur entre deux essais de l'utilisateur, pour éviter les attaques par force brute. Le document B. ROBISSON ET AL: "Management of the security in smart secure devices",SMART SYSTEMS INTEGRATION, DRESDEN, 22 - 23 MARCH 2011, 22 mars 2011 (2011-03-22), XP055064434,Germany ISBN: 978-3-80-073324-8 divulgue l'utilisation de contre mesures graduelles (en fonction de la réponse de capteurs) dans le domaine de la télévision payante. Ces capteurs peuvent inclure le nombre de mot de passes erronés, le calcul d'intégrité ou bien la sensibilité des données. Ces données sont utilisées pour calculer un niveau d'utilisation suspect de la puce. Ce niveau est lui même utilisé, par exemple pour mettre à jour le nombre d'opérations de redondances effectués pour assurer la sécurité du système. Le document US 2012/255005 A1 (YOSHIMI HIDEO [JP]) 4 octobre 2012 (2012-10-04) divulgue l'emploi de mesures de sécurités qui sont une fonction du niveau de sécurité. Lorsque des attaques ou menaces sont détectées, des contres mesures sont mises en places. Celles ci sont levées après l'écoulement d'une certaine période de temps (mesurées à l'aide de la décharge d'un condensateur). Le niveau de sécurité est incrémenté ou décrémenté linéairement. Bien que la description qui suit soit relative à des cartes à puce (cette description étant ainsi donnée à titre d'exemple de domaine d'application), la présente invention concerne tout dispositif électronique à mémoire, qu'il se présente ou pas sous forme de carte. Ainsi, la présente invention est pertinente dans le domaine des cartes à puce, dites aussi cartes intelligentes (smart card en anglais). Une telle carte à puce incorpore des circuits électroniques comportant au moins une mémoire et un microprocesseur et est ainsi prévue pour pouvoir échanger des données avec un lecteur approprié. De même, sous commande du lecteur, une telle carte est prévue pour pouvoir mettre en œuvre des processus internes, par exemple de chiffrement de données, de vérification de numéros d'identification personnelle PIN, etc.

Dans la ou les mémoires d'un dispositif électronique, sont stockées des données sensibles et confidentielles (données personnelles, données d'identification, mots de passe, etc. selon l'utilisation envisagée) qui doivent être protégées contre des attaques pouvant compromettre la confidentialité et/ou l'intégrité de ces données. De telles attaques sont, par exemple, des attaques physiques à l'encontre de la carte elle-même, telles que l'analyse du courant d'alimentation de la carte, l'injection de fautes consistant à perturber la carte de manière à l'amener à ne plus fonctionner correctement, mais aussi, par exemple, des attaques logiques exploitant des erreurs ou bugs logiciels. Ces attaques ont donc pour but ultime la connaissance des informations confidentielles stockées dans la carte.

Il existe des moyens qui permettent de détecter les conditions de fonctionnement des circuits électroniques d'une carte et de rendre muette la carte lorsque ces conditions deviennent anormales. Ces moyens peuvent également bloquer définitivement tout fonctionnement de la carte. Il peut s'agir de détecteurs optiques pour détecter une ouverture du circuit intégré renfermant la ou les mémoires des circuits électroniques. Il peut également s'agir de détecteurs de tension qui détectent si la tension d'alimentation est trop faible ou au contraire trop élevée.

Une carte à puce est alimentée par le lecteur dans lequel elle est insérée. Une coupure de l'alimentation peut entraîner, au moment de la ré-alimentation, un manque d'intégrité des données dans la ou les mémoires des circuits électroniques de la carte, manque qui peut être mis à profit pour remonter aux informations confidentielles de la carte. Cela peut être le cas lorsqu'une coupure d'alimentation a lieu pendant l'écriture d'un ensemble de blocs de données dans une zone mémoire et interrompt ce processus alors qu'il n'est pas achevé. A la ré-alimentation, seule une partie des blocs a été écrite si bien que la zone mémoire ne contient pas des données cohérentes. Cela est généralement le cas lorsqu'un processus doit être exécuté de manière "atomique", c'est-à-dire qu'il doit être exécuté soit complètement, soit pas du tout.

Des mesures sont généralement prises pour qu'à la ré-alimentation, la carte, notamment la ou les mémoires soient replacées dans l'état intègre où elles étaient avant le processus qui a été interrompu. Comme la coupure d'alimentation en question peut résulter d'un retrait de la carte à puce du lecteur, ces mesures sont généralement appelées mesures anti-arrachement, ou anti-tearing en anglais.

Cette coupure d'alimentation peut résulter d'un retrait par l'utilisateur lui-même de sa carte à puce du lecteur ou au contraire d'un retrait par un tiers attaquant la carte pour en retirer les informations qu'elle contient. Dans le premier cas, les mesures évoquées ci-dessus sont tout à fait appropriées et peuvent même être complètement transparentes pour l'utilisateur. Dans le second, il serait plutôt souhaitable de bloquer définitivement le fonctionnement de la carte. Néanmoins, il n'existe pas de moyens permettant de discriminer un arrachage simple par l'utilisateur d'une attaque, d'où le problème dont la présente invention apporte une solution.

Le but de la présente invention est de prévoir un procédé de mise en place de moyens de sécurité dans un dispositif électronique à mémoire qui permette de résoudre les problèmes évoqués ci-dessus.

Pour ce faire, la présente invention concerne un tel procédé de mise en place de moyens de sécurité qui est mis en œuvre suite à la réception par ledit dispositif d'une commande spécifiant un processus qu'il doit lancer.

Selon une caractéristique de l'invention, ledit procédé comporte les étapes suivantes :
- une étape de lecture de la valeur d'un indice de confiance stocké dans un compteur que comporte ledit dispositif, ledit compteur gardant la dernière valeur qu'il a stockée même si l'alimentation dudit dispositif a été coupée,
- une étape de mise en place de moyens de sécurité spécifiques selon la valeur de l'indice de confiance lue à l'étape de lecture,
- une première étape de modification de la valeur de l'indice de confiance qui passe d'une valeur initiale à une valeur modifiée, ladite valeur modifiée correspondant à une confiance accordée par la carte à son environnement inférieure à celle de la valeur initiale,
- une étape de lancement du processus visé par ladite commande,
   et, si le processus s'est déroulé complètement sans interruption,
- une seconde étape de modification de la valeur de l'indice de confiance qui, selon le processus qui a été mis en œuvre, résulte en une valeur de l'indice de confiance égale à ladite valeur initiale ou en une valeur correspondant à un gain de confiance par rapport à la valeur initiale.

Selon une autre caractéristique avantageuse, lorsque le processus mis en œuvre par ledit dispositif électronique est un processus de contrôle à issues multiples, l'amplitude de la modification de la valeur de l'indice de confiance de la seconde étape de modification dépend de l'issue du processus mis en œuvre.

Selon une autre caractéristique avantageuse de l'invention, lorsque le processus mis en œuvre par ledit dispositif électronique est un processus de contrôle à deux issues, une positive et une négative, la valeur de l'indice de confiance résultant de la seconde étape de modification est égale à la valeur initiale ou à une valeur correspondant à une confiance inférieure à celle de la valeur initiale si l'issue du processus de contrôle est négative et est égale à une valeur de l'indice de confiance correspondant à une confiance supérieure à celle de la valeur initiale si l'issue du processus de contrôle est positive.

Selon une autre caractéristique avantageuse de l'invention, la modification apportée par la première étape de modification dépend du niveau de sûreté du processus visé par ladite commande. Par exemple, ladite valeur de l'indice de confiance peut prendre toutes les valeurs comprises entre 0 et N, la première étape de modification est une étape d'incrémentation de la valeur de l'indice de confiance stockée dans ledit compteur, ledit incrément étant égal à n pour des processus sûrs et égal à m > n pour des processus sensibles, et la seconde étape de modification est une étape de décrémentation de la valeur de l'indice de confiance stockée dans ledit compteur, ledit décrément étant égal à n pour des processus sûrs ou pour des processus sensibles mais qui ne sont pas des processus de contrôle, égal ou inférieur à m pour des processus sensibles de contrôle dont l'issue est négative, et égal à p > m pour des processus sensible de contrôle dont l'issue est positive.

Selon un autre exemple, ladite valeur de l'indice de confiance peut prendre toutes les valeurs comprises entre 0 et N, la première étape de modification est une étape de décrémentation de la valeur de l'indice de confiance stockée dans ledit compteur, ledit décrément étant égal à n pour des processus sûrs et égal à m > n pour des processus sensibles, et la seconde étape de modification est une étape d' incrémentation de la valeur de l'indice de confiance stockée dans ledit compteur, ledit incrément étant égal à n pour des processus sûrs ou pour des processus sensibles mais qui ne sont pas des processus de contrôle, égal ou inférieur à m pour des processus sensibles de contrôle dont l'issue est négative, et égal à p > m pour des processus sensibles de contrôle dont l'issue est positive.

Selon une autre caractéristique avantageuse de l'invention, les moyens de sécurité mis en place par ladite étape de mise en place dépendent de plusieurs niveaux de confiance définis de manière qu'à chacun d'eux, est affectée soit une valeur soit une fourchette prédéterminée de valeurs d'indice de confiance. Par exemple, un niveau de confiance N0 correspond à une valeur de l'indice de confiance de N, un niveau de confiance N1 correspond à des valeurs de l'indice de confiance comprises entre S1 et N-1, un niveau de confiance N2 à des valeurs de l'indice de confiance comprises entre 1 et S1-1 et un niveau de confiance N3 à une valeur de l'indice de confiance égale à 0.

Selon un autre exemple, un niveau de confiance N0 correspond à une valeur de l'indice de confiance de 0, un niveau de confiance N1 correspond à des valeurs de l'indice de confiance comprises entre 1 et S1', un niveau de confiance N2 à des valeurs de l'indice de confiance comprises entre S1'+1 et N-1 et un niveau de confiance N3 à une valeur de l'indice de confiance égale à N.

La présente invention concerne également un dispositif électronique à mémoire, tel qu'une carte à puce, du type qui comprend des moyens pour son alimentation électrique et des moyens pour recevoir des commandes, une partie électronique de la carte à puce constituée d'un microprocesseur et d'au moins une mémoire. Il est caractérisé en ce qu'il comporte un compteur de confiance pour stocker un indice de confiance, ledit dispositif électronique étant prévu pour mettre en œuvre un procédé tel que celui qui vient d'être décrit.

Enfin, la présente invention concerne un programme implémenté dans une mémoire d'un dispositif électronique à mémoire tel qu'il vient d'être décrit, susceptible d'être mis en œuvre au sein dudit microprocesseur dudit dispositif électronique et comprenant des instructions pour la mise en œuvre d'un procédé tel qu'il vient d'être décrit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est une vue schématique d'une carte à puce donnée uniquement comme étant un exemple de dispositif électronique à mémoire selon l'invention et d'application du procédé de l'invention,
La Fig. 2 est un diagramme illustrant les étapes essentielles d'un procédé selon la présente invention,
La Fig. 3 est un diagramme illustrant les étapes d'un procédé selon un mode de réalisation de l'invention,
La Fig. 4 est un diagramme illustrant les étapes d'un procédé selon un autre mode de réalisation de l'invention, et
La Fig. 5 est un diagramme illustrant le fonctionnement d'un procédé selon la présente invention.

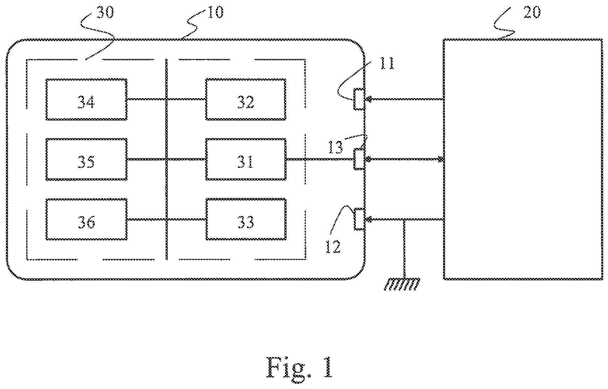

On a représenté schématiquement à la Fig. 1 un exemple d'un dispositif électronique à mémoire selon la présente invention, se présentant sous la forme d'une carte à puce (smart card) 10 qui comprend des moyens pour son alimentation électrique et des moyens pour recevoir des commandes. Dans l'exemple de réalisation représenté, les moyens pour l'alimentation électrique dudit dispositif sont constitués de plots, notamment un plot d'alimentation 11 destiné à être connecté à l'alimentation d'un lecteur 20, un plot de masse 12 destiné à être connecté à la masse dudit lecteur 20. Les moyens de réception d'une commande sont constitués d'un plot de données 13 destiné à recevoir et transmettre des signaux de données avec le lecteur de carte 20.

Généralement, une carte à puce comporte de tels plots, mais aussi d'autres plots qui ne sont pas décrits ici car sans intérêt pour l'invention. On pourra se reporter au document de normalisation ISO 7816 - 3 pour une plus ample description de cet aspect des cartes à puce. La partie électronique 30 de la carte à puce 10 est constituée d'un microprocesseur 31, d'une mémoire volatile 32, d'une mémoire morte réinscriptible 33 (par exemple, mémoire EEPROM ou mémoire FLASH) et de plusieurs, ici 3, moyens 34, 35 et 36 de mise en œuvre d'applications spécifiques. Cette description du dispositif 10 et de sa partie électronique 20 est donnée uniquement à titre d'exemple.

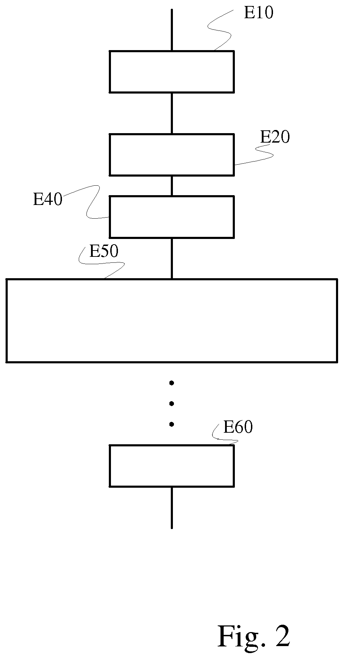

On a représenté à la Fig. 2 les étapes du procédé de l'invention, étapes qui sont mises en œuvre par la carte à puce 10 et, plus exactement, par le microprocesseur 31. C'est la réception d'une unité de commande, dite APDU (comme unité de données de protocole d'application) portée par un signal de données sur le plot de données 13 (voir Fig. 1) qui déclenche le lancement d'une instance du procédé de l'invention. Le déroulement du procédé de l'invention suite à la réception d'une unité de commande est dit par la suite instance du procédé de l'invention.

Cette unité de commande ADPU reçue spécifie notamment le processus qui doit être lancé et mis en œuvre par la carte à puce 10, dans la présente instance du procédé de l'invention.

La première étape du procédé de l'invention est une étape E10 de lecture de la valeur stockée dans un compteur, dit compteur de confiance, que comporte la partie électronique 30 de la carte à puce. Ce compteur peut être un registre spécifique du microprocesseur 31 ou une cellule spécifique de la mémoire morte 33. Ce compteur est tel qu'il garde la dernière valeur qu'il a stockée même si l'alimentation de la carte à puce 10 a été coupée. La donnée stockée dans le compteur de confiance sera dite par la suite indice de confiance.

Les valeurs prises par l'indice de confiance peuvent s'étendre de 0 à N (Par exemple N = 255 pour un compteur à 8 bits). Selon un premier exemple de réalisation de l'invention, la valeur 0 correspond au maximum de confiance accordée par la carte à puce à son environnement et la valeur N au minimum de confiance. La valeur de l'indice de confiance à la toute première mise en marche de la carte à puce est alors égale à 0.

Selon un second exemple de réalisation, la valeur N correspondant au maximum de confiance accordée par la carte à puce est la valeur 0 au minimum de confiance. Dans ce cas, la valeur de l'indice de confiance à la toute première mise en marche de la carte à puce est égale à N.

La seconde étape du procédé de l'invention est une étape E20 de mise en place de moyens de sécurité spécifiques selon la valeur lue à l'étape E10 de l'indice de confiance. Cette étape E20 sera explicitée un peu plus tard.

L'étape 40 suivante est une première étape de modification de la valeur de l'indice de confiance, étape faisant passer ladite valeur d'une valeur initiale à une valeur modifiée. Cette valeur modifiée est telle qu'elle est représentative d'une confiance accordée par la carte à son environnement inférieure à celle de la valeur de confiance initiale.

Selon un mode de réalisation, l'amplitude de cette modification dépend du niveau de sûreté du processus mis en œuvre par la commande visée par l'unité de commande ADPU qui a déclenché la présente instance du procédé de l'invention.

Par exemple, des processus mis en œuvre par la carte à puce qui ne manipulent pas de données sensibles et qui ne permettent pas non plus de retrouver des données sensibles sont dits sûrs. L'amplitude **n** de la modification apportée à la valeur de l'indice de confiance sera alors relativement faible, par exemple n = 1. Par contre, des processus qui manipulent des données sensibles ou qui peuvent faire l'objet d'attaques pour retrouver des données sensibles sont sensibles et donc moins sûrs. L'amplitude **m** de la modification apportée à la valeur de l'indice de confiance sera relativement plus importante, par exemple m = 4.

Selon le premier exemple de réalisation ci-dessus de l'invention, l'étape E40 suivante est une étape d'incrémentation de la valeur de l'indice de confiance (la confiance accordée par la carte à son environnement a diminué) et de stockage de la valeur ainsi obtenue dans le compteur de confiance. Par exemple, l'incrément est de **n** pour les processus sûrs et de **m** pour les processus sensibles.

Selon le second exemple de réalisation ci-dessus de l'invention, l'étape E40 suivante est une étape de décrémentation de la valeur de confiance et stockage de la valeur ainsi obtenue dans le compteur de confiance. Par exemple, le décrément est de **n** pour les processus sûrs et de **m** pour les processus sensibles.

L'étape E50 est le lancement du processus visé par l'unité de commande ADPU qui a déclenché la présente instance du procédé de l'invention.

Lorsque ce processus s'est déroulé complètement sans interruption, le procédé de l'invention se poursuit par une seconde étape E60 de modification de la valeur de l'indice de confiance. L'amplitude de cette modification est fonction du processus qui a été mis en œuvre.

On doit mentionner ici que, parmi les processus que la carte à puce est susceptible de mettre en œuvre, certains, dits processus de contrôle, sont des processus qui ont deux issues possibles selon leur déroulement : l'une positive, correspondant à un déroulement correct du processus, l'autre négative, correspondant à un déroulement non-correct bien que terminé sans interruption. Typiquement, cela peut être un processus de demande de numéro PIN qui a une issue positive si l'utilisateur entre un numéro PIN correct et une issue négative dans le cas contraire.

Le processus de contrôle peut également être un processus à issues multiples. Par exemple, chaque issue est caractérisée par une valeur particulière d'un ou plusieurs paramètres.

A l'étape E60, si le processus n'est pas un processus de contrôle, alors la modification est telle que la valeur de l'indice de confiance reprend sa valeur initiale, c'est-à-dire la valeur qu'il avait avant la modification de l'étape E40.

Par contre, si le processus est un processus de contrôle, alors la modification dépend de l'issue du processus.

Dans le cas où le processus de contrôle est à deux issues, l'une positive, l'autre négative et si l'issue de ce processus de contrôle est positive, alors la modification est telle que la valeur de l'indice de confiance modifiée correspond à une confiance supérieure à la confiance liée à la valeur initiale. Par contre, si l'issue du processus de contrôle est négative, alors la modification est telle que la valeur de l'indice de confiance reprend sa valeur initiale, voire une valeur correspondant à une confiance inférieure à celle de la valeur initiale.

Dans le cas où le processus de contrôle est à issues multiples, la valeur de l'indice de confiance modifiée correspond à une confiance supérieure ou inférieure à la confiance liée à la valeur initiale, selon l'issue considérée (par exemple selon la valeur d'un paramètre caractérisant ladite issue considérée).

Selon le premier mode de réalisation mentionné ci-dessus, l'étape E60 est une étape de décrémentation du compteur de confiance. La valeur de décrément est généralement égale à la valeur de l'incrément correspondant, de manière que la valeur de l'indice de confiance après modification de l'étape E60 est égale à cette valeur initiale avant modification de l'étape E40, sauf pour les processus de contrôle où la valeur de décrément est soit supérieure à celle de l'incrément correspondant si l'issue du processus est positive, soit égale, voire inférieure, si l'issue du processus est négative.

Par exemple, si le processus correspond à un processus de vérification d'un numéro d'identification PIN entré par l'utilisateur et si cette vérification montre que ce numéro est correct, l'issue du processus est dite positive et la valeur du décrément de l'étape E60 est supérieure à la valeur de l'incrément de l'étape E40. Ainsi, la valeur de l'indice de confiance après déroulement du processus de vérification, c'est-à-dire aussi après le déroulement de la présente instance du procédé de l'invention, a été modifiée pour une augmentation de la confiance accordée par la carte à son environnement. Par contre, si cette vérification montre que le numéro entré par l'utilisateur n'est pas correct, l'issue du processus est dite négative et la valeur du décrément est inférieure ou égale à la valeur de l'incrément de l'étape E40. Ainsi, la valeur de l'indice de confiance après déroulement du processus de vérification et par conséquent, après l'instance courante, n'a pas changé ou a évolué pour une diminution de la confiance accordée par la carte à son environnement.

Dans ce premier mode de réalisation de l'invention ci-dessus, la valeur de décrément est de **n** pour les processus sûrs de contrôle ou pas, de **m** pour les processus sensibles qui ne sont pas de contrôle, de **m** pour les processus sensibles de contrôle si le déroulement a eu une issue négative et de **p** (p > m) si le déroulement a eu une issue positive. Par exemple, **p** = 6.

Selon le second mode de réalisation mentionné ci-dessus, l'étape E60 est une étape d'incrémentation du compteur de confiance. La valeur d'incrément est généralement égale à la valeur de décrément correspondant de l'étape E40, de manière que la valeur de l'indice de confiance après modification de l'étape E60 soit égale à cette valeur initiale avant modification de l'étape E40, sauf pour les processus de contrôle où la valeur d'incrément est soit supérieure à celle du décrément correspondant si l'issue du processus est positive **p** (p > m), soit égale, voire inférieure, si l'issue du processus est négative. Par exemple, **p** = 6.

Si le processus lancé par l'étape E50 est interrompu d'une manière ou d'une autre, l'étape E60 n'est pas, de ce fait, mise en œuvre. La valeur de l'indice de confiance présente dans le compteur de confiance est alors celle qui a été stockée à l'étape E40. Ainsi, la valeur de l'indice de confiance après déroulement de l'instance courante du procédé de l'invention a évolué pour une confiance donnée par la carte à son environnement qui est diminuée.

Le processus peut par exemple être interrompu par une interruption de l'alimentation de la carte à puce, par exemple par retrait prématuré de celle-ci du lecteur dans lequel elle était insérée ou par coupure de l'alimentation par le lecteur. Il peut également être interrompu par une attaque qui a été détectée par la partie électronique de la carte, laquelle n'effectue plus aucune opération.

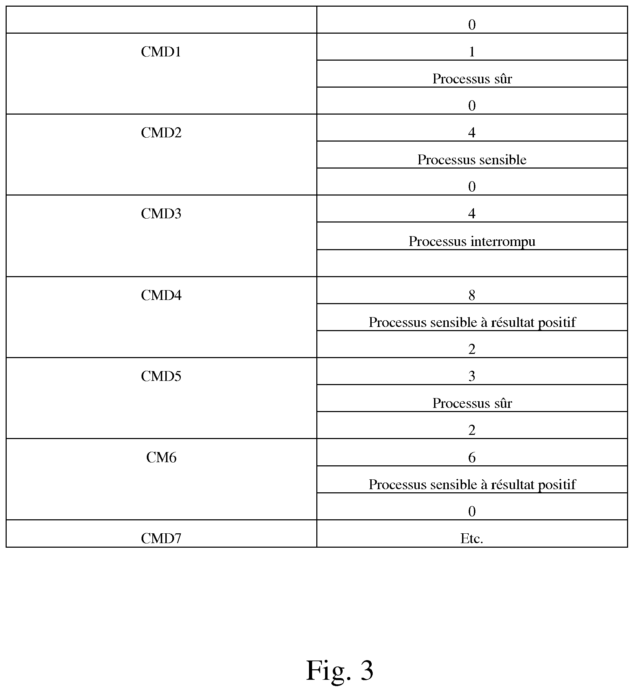

A la Fig. 3, on a représenté dans la colonne de gauche, une suite d'unités de commande CMD1 à CMD7 reçues successivement et, dans la colonne de droite, les valeurs de l'indice confiance présentes dans le compteur de confiance au cours du temps. Le mode de réalisation est le premier exemple de réalisation mentionné ci-dessus.

Initialement, la valeur de l'indice de confiance est 0. A la réception de l'unité de commande CMD1, cette valeur est incrémentée de 1, puisque le processus visé par l'unité de commande CMD1 est un processus sûr. Lorsque ce processus est terminé, la valeur de l'indice confiance est décrémentée d'un décrément égal à l'incrément correspondant à ce processus, c'est-à-dire 1. La valeur de l'indice de confiance est de nouveau 0.

A la réception de l'unité de commande CMD2 suivante, la valeur de l'indice de confiance est incrémentée de 4, puisque le processus visé par l'unité de commande CMD2 est un processus sensible, qui n'est pas un processus de contrôle. Lorsque ce processus est terminé correctement, la valeur de l'indice de confiance est décrémentée d'un décrément égal à l'incrément correspondant à ce processus, c'est-à-dire 4. La valeur de l'indice de confiance est de nouveau 0.

A la réception de l'unité de commande CMD3, la valeur de l'indice de confiance est incrémentée de 4, puisque là aussi le processus visé par l'unité de commande CMD2 est un processus sensible. On considère ici que ce processus est interrompu, par exemple dû à un retrait de la carte du lecteur.

A la réception de l'unité de commande CMD4 suivante, la valeur de l'indice de confiance est incrémentée de 4, puisque le processus visé par l'unité de commande CMD4 est un processus sensible de contrôle. La valeur de l'indice de confiance devient alors égale à 4 + 4 = 8. Elle a ainsi évolué vers un niveau de confiance inférieur. Lorsque ce processus est terminé correctement, ici avec une issue positive (le processus visé est un processus sensible de contrôle), la valeur de l'indice de confiance est décrémentée d'un décrément supérieur à l'incrément correspondant à ce processus, en l'occurrence 6. La valeur de l'indice de confiance devient égale à 2. On remarquera que du fait que le processus est un processus de contrôle qui a eu une issue positive, la carte a regagné un peu de la confiance en son environnement qui avait été perdue du fait de l'interruption du processus précédent.

L'intérêt du procédé de l'invention est aussi dans ce mécanisme de rattrapage de confiance. En effet, si l'interruption est causée par inadvertance par l'utilisateur attitré, celui-ci dès la prochaine insertion de sa carte 10 dans le lecteur 20 donnera les codes PIN corrects (les processus de contrôle auront une issue correcte (positive)) et la confiance de la carte en son environnement (donnée par la valeur de l'indice de confiance) reviendra très rapidement à sa valeur "normale". Par contre, si l'interruption est causée par une attaque, elle ne sera pas isolée comme dans le cas de l'utilisateur attitré mais répétée avec à chaque fois une issue incorrecte (négative) des processus de contrôle. La confiance de la carte en son environnement diminuera et ne pourra pas être rattrapée.

A la réception de l'unité de commande CMD5 suivante, la valeur de l'indice de confiance est incrémentée de 1, puisque le processus visé par l'unité de commande CMD1 est un processus sûr. Lorsque ce processus est terminé, la valeur de l'indice de confiance est décrémentée d'un décrément égal à l'incrément correspondant à ce processus, c'est-à-dire 1. La valeur de l'indice de confiance est de nouveau 2.

A la réception de l'unité de commande CMD6, la valeur de l'indice de confiance est incrémentée de 4, puisque le processus visé par l'unité de commande CMD6 est un processus sensible de contrôle. La valeur de l'indice de confiance devient alors égale à 6. Lorsque ce processus est terminé correctement, ici avec une valeur positive (le processus visé est un processus sensible de contrôle). La valeur de l'indice de confiance est décrémentée d'un décrément supérieur à l'incrément correspondant à ce processus, en l'occurrence 6. La valeur de l'indice de confiance redevient égale à 0.

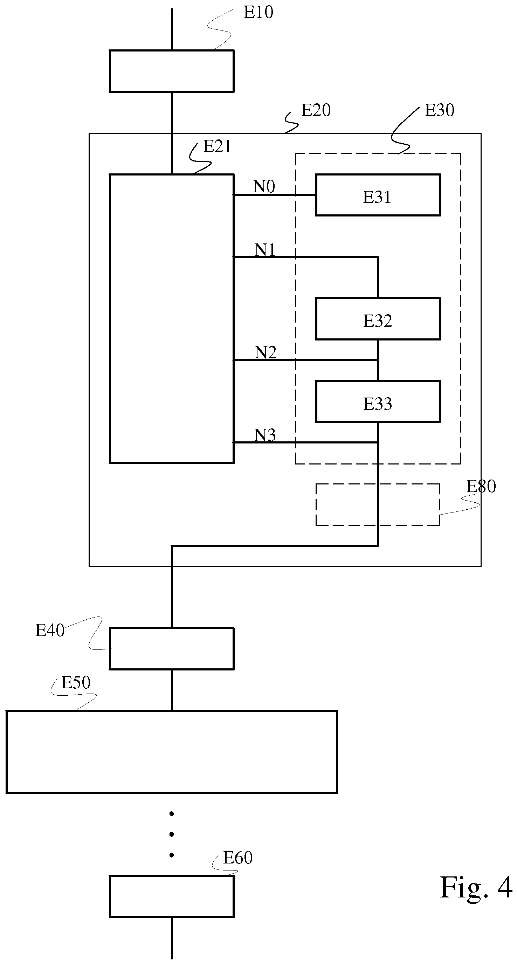

A la Fig. 4, l'étape E20 de mise en place de moyens de sécurité est constituée d'une étape E21 d'évaluation de l'indice de confiance lue à l'étape E10 et de détermination d'un niveau de confiance correspondant. Plusieurs niveaux de confiance sont définis et, à chacun d'eux, est affectée soit une valeur soit une fourchette prédéterminée de valeurs d'indice de confiance. Le niveau de confiance correspondant à une valeur de l'indice de confiance préalablement lue est déterminé par l'appartenance de cette valeur de l'indice de confiance à une desdites fourchettes de valeurs prédéterminées.

A la Fig. 4, à titre d'exemple, quatre niveaux de confiance N0 à N3 sont prévus. Le niveau de confiance N0 correspond à un niveau de confiance nul (la carte à puce considère qu'elle est assurément l'objet d'une attaque), les autres niveaux N1 à N3 reflétant des niveaux de confiance supérieurs et croissants.

Dans le premier exemple de réalisation de l'invention donné ci-dessus, un niveau de confiance N0 correspond à une valeur de l'indice de confiance de N, un niveau de confiance N1 correspond à des valeurs de l'indice de confiance comprises entre S1 et N - 1, un niveau de confiance N2 à des valeurs de l'indice de confiance comprises entre S1-1 et 1 et un niveau de confiance N3 à une valeur de l'indice de confiance égale à 0. Par exemple, N = 255, S1 = 215.

Dans le second exemple de réalisation de l'invention mentionné ci-dessus, un niveau de confiance N0 correspond à une valeur de l'indice de confiance de 0, un niveau de confiance N1 pour des valeurs de l'indice de confiance comprises entre 1 et S1', un niveau de confiance N2 pour des valeurs de l'indice de confiance comprises entre S1'+1 et N-1 et un niveau de confiance N3 pour la valeur de l'indice de confiance égale à N. Par exemple, N = 255 et S1'= 40.

L'étape E20 inclut également une étape E30 qui, selon le niveau de confiance déterminé à l'étape E20, un ou des processus de sécurité correspondants peuvent être activés, en plus de processus de sécurité déjà activés par défaut. Par exemple, comme illustré à la Fig. 4, pour le niveau de confiance N0, le processus de sécurité E31 est activé. Il consiste, par exemple, à rendre définitivement muette la carte à puce. Dans cet état, la carte à puce ne déclenche plus aucun processus, quoiqu'il arrive. A l'inverse, pour le niveau de confiance N3 le plus élevé, aucun processus supplémentaire n'est activé. Pour le niveau de confiance intermédiaire N2, seul le processus de sécurité E33 est activé en plus des processus de sécurité déjà activés. Il consiste, par exemple, au lancement de fonctions de contremesure à des attaques simples, par exemple des attaques laser simples. Pour le niveau de confiance N1, le processus de sécurité E32 est activé puis le processus E33. Le processus de sécurité E32 consiste, par exemple, au lancement de fonctions de contremesure à des attaques multiples, par exemple des attaques laser multiples.

L'étape E20 peut également inclure une étape 80 optionnelle (c'est pour cette raison qu'elle est en traits pointillés sur la Fig. 4) qui retarde le déroulement de l'instance en cours du procédé d'un délai fonction de la valeur de l'indice de confiance qui est stockée dans le compteur de confiance.

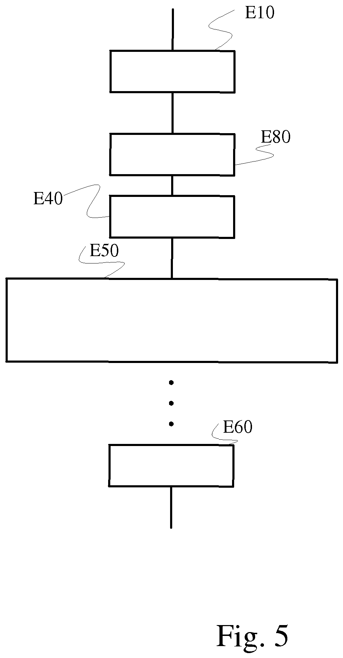

A la Fig. 5, on a représenté un mode de réalisation de l'invention dans lequel l'étape E20 du procédé de l'invention dans le mode de réalisation de la Fig. 4 a été supprimée, et l'étape E80 mentionnée ci-dessus est mise en œuvre juste après l'étape E10.

## Revendications

1. Procédé de mise en place de moyens de sécurité dans un dispositif électronique à mémoire, tel qu'une carte à puce, suite à la réception par ledit dispositif d'une commande spécifiant un processus qui doit être lancé par ledit dispositif, **caractérisé en ce qu'**il comporte les étapes suivantes :
- une étape de lecture de la valeur d'un indice de confiance stocké dans un compteur que comporte ledit dispositif, ledit compteur gardant la dernière valeur qu'il a stockée même si l'alimentation dudit dispositif a été coupée,
- une étape de mise en place de moyens de sécurité spécifiques selon la valeur de l'indice de confiance lue à l'étape de lecture,
- une première étape de modification de la valeur de l'indice de confiance qui passe d'une valeur initiale à une valeur modifiée, ladite valeur modifiée correspondant à une confiance accordée par la carte à son environnement inférieure à celle de la valeur initiale, ladite valeur de l'indice de confiance pouvant prendre toutes les valeurs comprises entre 0 et N, la première étape de modification est une étape d'incrémentation de la valeur de l'indice de confiance stockée dans ledit compteur, ledit incrément étant égal à n pour des processus sûrs et égal à m > n pour des processus sensibles,
- une étape de lancement du processus visé par ladite commande,
et, si le processus s'est déroulé complètement sans interruption,
- une seconde étape de modification de la valeur de l'indice de confiance, la seconde étape de modification est une étape de décrémentation de la valeur de l'indice de confiance stockée dans ledit compteur, ledit décrément étant égal à n pour des processus sûrs ou pour des processus sensibles mais qui ne sont pas des processus de contrôle, égal ou inférieur à m pour des processus sensibles de contrôle dont l'issue est négative, et égal à p > m pour des processus sensible de contrôle dont l'issue est positive:
- une première étape de modification de la valeur de l'indice de confiance qui passe d'une valeur initiale à une valeur modifiée, ladite valeur modifiée correspondant à une confiance accordée par la carte à son environnement inférieure à celle de la valeur initiale, ladite valeur de l'indice de confiance peut prendre toutes les valeurs comprises entre 0 et N, la première étape de modification est une étape de décrémentation de la valeur de l'indice de confiance stockée dans ledit compteur, ledit décrément étant égal à n pour des processus sûrs et égal à m > n pour des processus sensibles
- une étape de lancement du processus visé par ladite commande,
et, si le processus s'est déroulé complètement sans interruption,
- une seconde étape de modification de la valeur de l'indice de confiance, la seconde étape de modification étant une étape d' incrémentation de la valeur de l'indice de confiance stockée dans ledit compteur, ledit incrément étant égal à n pour des processus sûrs ou pour des processus sensibles mais qui ne sont pas des processus de contrôle, égal ou inférieur à m pour des processus sensibles de contrôle dont l'issue est négative, et égal à p > m pour des processus sensibles de contrôle dont l'issue est positive,

2. Procédé selon la revendication 1, **caractérisé en ce que**, lorsque le processus mis en œuvre par ledit dispositif électronique est un processus de contrôle à deux issues, une positive et une négative, la valeur de l'indice de confiance résultant de la seconde étape de modification est égale à la valeur initiale ou à une valeur correspondant à une confiance inférieure à celle de la valeur initiale si l'issue du processus de contrôle est négative et est égale à une valeur de l'indice de confiance correspondant à une confiance supérieure à celle de la valeur initiale si l'issue du processus de contrôle est positive.

3. Procédé selon une des revendications précédentes, **caractérisé en ce que** la modification apportée par la première étape de modification dépend du niveau de sûreté du processus visé par ladite commande.

4. Procédé selon une des revendications précédentes, **caractérisé en ce que** n = 1, m = 4 et p = 6.

5. Procédé selon une des revendications précédentes, **caractérisé en ce que** les moyens de sécurité mis en place par ladite étape de mise en place dépendent de plusieurs niveaux de confiance définis de manière qu'à chacun d'eux, est affectée soit une valeur soit une fourchette prédéterminée de valeurs d'indice de confiance.

6. Procédé selon la revendication 5, **caractérisé en ce qu'**un niveau de confiance N0 correspond à une valeur de l'indice de confiance de N, un niveau de confiance N1 correspond à des valeurs de l'indice de confiance comprises entre S1 et N-1, un niveau de confiance N2 à des valeurs de l'indice de confiance comprises entre 1 et S1-1 et un niveau de confiance N3 à une valeur de l'indice de confiance égale à 0.

7. Procédé selon la revendication 6, **caractérisé en ce que** N= 255, S1 = 215.

8. Procédé selon la revendication 7, **caractérisé en ce qu'**un niveau de confiance N0 correspond à une valeur de l'indice de confiance de 0, un niveau de confiance N1 correspond à des valeurs de l'indice de confiance comprises entre 1 et S1', un niveau de confiance N2 à des valeurs de l'indice de confiance comprises entre S1'+1 et N-1 et un niveau de confiance N3 à une valeur de l'indice de confiance égale à N.

9. Procédé selon la revendication 8, **caractérisé en ce que** N= 255, S1' = 40.

10. Dispositif électronique à mémoire, tel qu'une carte à puce, du type qui comprend des moyens (11, 12) pour son alimentation électrique et des moyens (13) pour recevoir des commandes, une partie électronique (30) de la carte à puce (10) constituée d'un microprocesseur (31) et d'au moins une mémoire (32, 33), **caractérisée en ce qu'**elle comporte un compteur de confiance pour stocker un indice de confiance, ledit dispositif électronique étant prévu pour mettre en œuvre un procédé selon une des revendications 1 à 9.

11. Programme implémenté dans une mémoire d'un dispositif électronique à mémoire selon la revendication 10, susceptible d'être mis en œuvre au sein dudit microprocesseur (31) et comprenant des instructions pour la mise en œuvre d'un procédé selon l'une des revendications 1 à 9.

## Patentansprüche

1. Verfahren zur Installation von Sicherheitsmitteln in einer elektronischen Vorrichtung mit Speicher wie einer Chipkarte nach dem Empfangen eines Kommandos durch die Vorrichtung, das einen Prozess spezifiziert, der von der Vorrichtung gestartet werden muss, **dadurch gekennzeichnet, dass** es die folgenden Schritte umfasst:
- einen Schritt des Lesens des Werts eines Vertrauensindex, der in einem in der Vorrichtung enthaltenen Zähler gespeichert ist, wobei der Zähler den zuletzt gespeicherten Wert auch dann behält, wenn die Spannungsversorgung der Vorrichtung unterbrochen worden ist,
- einen Schritt der Installation von spezifischen Sicherheitsmitteln gemäß dem im Leseschritt gelesenen Wert des Vertrauensindex,
- einen ersten Schritt des Änderns des Werts des Vertrauensindex, der von einem Ausgangswert zu einem geänderten Wert übergeht, wobei der geänderte Wert einem Vertrauen der Karte gegenüber ihrer Umgebung entspricht, das geringer als das des Ausgangswerts ist, wobei der Wert des Vertrauensindex alle Werte zwischen 0 und N annehmen kann, wobei der erste Änderungsschritt ein Schritt des Inkrementierens des Werts des in dem Zähler gespeicherten Vertrauensindex ist, wobei das Inkrement bei sicheren Prozessen gleich n ist und bei sensitiven Prozessen gleich m > n ist,
- einen Schritt des Startens des von dem Kommando angestrebten Prozesses und, wenn der Prozess ohne Unterbrechung vollständig abgelaufen ist,
- einen zweiten Schritt des Änderns des Werts des Vertrauensindex, wobei der zweite Änderungsschritt ein Schritt des Dekrementierens des in dem Zähler gespeicherten Werts des Vertrauensindex ist, wobei das Dekrement bei sicheren Prozessen oder bei sensitiven Prozessen, die jedoch keine Prüfprozesse sind, gleich n ist, bei sensitiven Prüfprozessen mit negativem Ergebnis kleiner oder gleich m ist und bei sensitiven Prüfprozessen mit positivem Ausgang gleich p > m ist, oder
- einen ersten Schritt des Änderns des Werts des Vertrauensindex, der von einem Ausgangswert zu einem geänderten Wert übergeht, wobei der geänderte Wert einem Vertrauen der Karte gegenüber ihrer Umgebung entspricht, das geringer als das des Ausgangswerts ist, wobei der Wert des Vertrauensindex alle Werte zwischen 0 und N annehmen kann, wobei der erste Änderungsschritt ein Schritt des Dekrementierens des Werts des in dem Zähler gespeicherten Vertrauensindex ist, wobei das Dekrement bei sicheren Prozessen gleich n ist und bei sensitiven Prozessen gleich m > n ist,
- einen Schritt des Startens des von dem Kommando angestrebten Prozesses und, wenn der Prozess ohne Unterbrechung vollständig abgelaufen ist,
- einen zweiten Schritt des Änderns des Werts des Vertrauensindex, wobei der zweite Änderungsschritt ein Schritt des Inkrementierens des in dem Zähler gespeicherten Werts des Vertrauensindex ist, wobei das Inkrement bei sicheren Prozessen oder bei sensitiven Prozessen, die jedoch keine Prüfprozesse sind, gleich n ist, bei sensitiven Prüfprozessen mit negativem Ausgang kleiner oder gleich m ist und bei sensitiven Prüfprozessen mit positivem Ausgang gleich p > m ist.

2. Verfahren nach Anspruch 1, **dadurch gekennzeichnet, dass**, wenn der von der elektronischen Vorrichtung ausgeführte Prozess ein Prüfprozess mit zwei Ausgängen ist, einem positiven und einem negativen, der aus dem zweiten Änderungsschritt resultierende Wert des Vertrauensindex bei negativem Ausgang des Prüfprozesses gleich dem Ausgangswert oder einem Wert ist, der einem geringeren Vertrauen als das des Ausgangswertes entspricht, und bei positivem Ausgang des Prüfprozesses gleich einem Wert des Vertrauensindex ist, der einem höheren Vertrauen als dem des Ausgangswerts entspricht.

3. Verfahren nach einem der vorhergehenden Ansprüche, **dadurch gekennzeichnet, dass** die mit dem ersten Änderungsschritt vorgenommene Änderung vom Sicherheitsniveau des von dem Kommando angestrebten Prozesses abhängt.

4. Verfahren nach einem der vorhergehenden Ansprüche, **dadurch gekennzeichnet, dass** n = 1, m = 4 und p = 6.

5. Verfahren nach einem der vorhergehenden Ansprüche, **dadurch gekennzeichnet, dass** die mit dem Installationsschritt installierten Sicherheitsmittel von mehreren Vertrauensniveaus abhängen, die so definiert sind, dass jedem von ihnen entweder ein Wert oder ein vorbestimmter Bereich von Vertrauensindexwerten zugewiesen ist.

6. Verfahren nach Anspruch 5, **dadurch gekennzeichnet, dass** ein Vertrauensniveau N0 einem Wert des Vertrauensindex von N entspricht, ein Vertrauensniveau N1 Werten des Vertrauensindex zwischen S1 und N-1 entspricht, ein Vertrauensniveau N2 Werten des Vertrauensindex zwischen 1 und S1-1 und ein Vertrauensniveau N3 einem Wert des Vertrauensindex gleich 0.

7. Verfahren nach Anspruch 6, **dadurch gekennzeichnet, dass** N = 255, S1 = 215.

8. Verfahren nach Anspruch 7, **dadurch gekennzeichnet, dass** ein Vertrauensniveau N0 einem Wert des Vertrauensindex von 0 entspricht, ein Vertrauensniveau N1 Werten des Vertrauensindex zwischen 1 und S1 entspricht, ein Vertrauensniveau N2 Werten des Vertrauensindex zwischen S1 +1 und N-1 und ein Vertrauensniveau N3 einem Wert des Vertrauensindex gleich N.

9. Verfahren nach Anspruch 8, **dadurch gekennzeichnet, dass** N = 255, S1 = 40.

10. Elektronische Vorrichtung mit Speicher wie eine Chipkarte des Typs, der Mittel (11, 12) zu seiner Stromversorgung und Mittel (13) zum Empfangen von Kommandos, einen elektronischen Teil (30) der Chipkarte (10), der aus einem Mikroprozessor (31) und aus mindestens einem Speicher (32, 33) besteht, umfasst, **dadurch gekennzeichnet, dass** sie einen Vertrauenszähler beinhaltet, um einen Vertrauensindex zu speichern, wobei die elektronische Vorrichtung dazu vorgesehen ist, ein Verfahren nach einem der Ansprüche 1 bis 9 auszuführen.

11. Programm, das in einem Speicher einer elektronischen Vorrichtung mit Speicher nach Anspruch 10 implementiert ist, geeignet ist, in dem Mikroprozessor (31) ausgeführt zu werden, und Befehle zur Ausführung eines Verfahrens nach einem der Ansprüche 1 bis 9 umfasst.

## Claims

1. Method for putting in place security means in an electronic device comprising at least one memory, i.e. a device such as a chip card, following reception by said device of a command specifying a process that must be launched by said device, **characterized in that** it comprises the following steps:
- a step of reading the value of a confidence index stored in a counter that said device comprises, said counter retaining the last value that it stored even if the power supply of said device has been cut,
- a step of putting in place specific security means depending on the value of the confidence index read in the reading step,
- a first step of modifying the value of the confidence index, which passes from an initial value to a modified value, said modified value corresponding to a confidence given by the card to its environment lower than that of the initial value, said value of the confidence index being able to take any value comprised between 0 and N, the first modifying step being a step of incrementing the value of the confidence index stored in said counter, said increment being equal to n for safe processes and equal to m > n for sensitive processes,
- a step of launching the process targeted by said command,
and, if the process proceeded without interruption,
- a second step of modifying the value of the confidence index, the second modifying step being a step of decrementing the value of the confidence index stored in said counter, said decrement being equal to n for safe processes or for sensitive processes that are not control processes, equal to or lower than m for sensitive control processes the outcome of which is negative, and equal to p > m for sensitive control processes the outcome of which is positive:
or
- a first step of modifying the value of the confidence index, which passes from an initial value to a modified value, said modified value corresponding to a confidence given by the card to its environment lower than that of the initial value, said value of the confidence index being able to take any value comprised between 0 and N, the first modifying step being a step of decrementing the value of the confidence index stored in said counter, said decrement being equal to n for safe processes and equal to m> n for sensitive processes
- a step of launching the process targeted by said command,
and, if the process proceeded without interruption,
- a second step of modifying the value of the confidence index, the second modifying step being a step of incrementing the value of the confidence index stored in said counter, said increment being equal to n for safe processes or for sensitive processes that are not control processes, equal to or lower than m for sensitive control processes the outcome of which is negative, and equal to p > m for sensitive control processes the outcome of which is positive.

2. Method according to Claim 1, **characterized in that**, when the process implemented by said electronic device is a control process having two outcomes, one positive and one negative, the value of the confidence index resulting from the second modifying step is equal to the initial value or to a value corresponding to a confidence lower than that of the initial value if the outcome of the control process is negative and is equal to a value of the confidence index corresponding to a confidence higher than that of the initial value if the outcome of the control process is positive.

3. Method according to one of the preceding claims, **characterized in that** the modification made by the first modifying step depends on the level of safety of the process targeted by said command.

4. Method according to one of the preceding claims, **characterized in that** n = 1, m = 4 and p = 6.

5. Method according to one of the preceding claims, **characterized in that** the security means put in place by said step of putting in place depend on a plurality of levels of confidence defined so that each thereof is assigned either one value or a preset range of values of confidence index.

6. Method according to Claim 5, **characterized in that** a level of confidence N0 corresponds to a value of the confidence index of N, a level of confidence N1 corresponds to values of the confidence index comprised between S1 and N-1, a level of confidence N2 to values of the confidence index comprised between 1 and S1-1 and a level of confidence N3 to a value of the confidence index equal to 0.

7. Method according to Claim 6, **characterized in that** N = 255 and S1 = 215.

8. Method according to Claim 7, **characterized in that** a level of confidence N0 corresponds to a value of the confidence index of 0, a level of confidence N1 corresponds to values of the confidence index comprised between 1 and S1', a level of confidence N2 to values of the confidence index comprised between S1'+1 and N-1 and a level of confidence N3 to a value of the confidence index equal to N.

9. Method according to Claim 8, **characterized in that** N = 255 and S1' = 40.

10. Electronic device comprising at least one memory, i.e. a device such as a chip card, said device being of the type that comprises means (11, 12) for supplying it with electrical power and means (13) for receiving commands, an electronic portion (30) of the chip card (10), which portion consists of a microprocessor (31) and at least one memory (32, 33), being **characterized in that** it comprises a confidence counter for storing a confidence index, provision being made for said electronic device to implement a method according to Claims 1 to 9.

11. Program implemented in a memory of an electronic device comprising at least one memory according to Claim 10, said program being capable of being implemented within said microprocessor (31) and containing instructions for implementing a method according to one of Claims 1 to 9.
